# FASCICULE DE BREVET EUROPEEN

(11) **EP 3 670 274 B1**
(45) Date de publication et mention de la délivrance du brevet: **14.07.2021**
(21) Numéro de dépôt: 19216013.3
(22) Date de dépôt: 13.12.2019
(51) Int. Cl.: B60R 21/34, B60J 5/10

(54) **PIECE DE CARROSSERIE COMPRENANT UNE BOUCLE DE VERROUILLAGE**
KAROSSERIETEIL, DAS EINE VERRIEGELUNGSSCHNALLE UMFASST
BODY PART COMPRISING A LOCKING LOOP

(30) Priorité: 21.12.2018 FR 1873929
(43) Date de publication de la demande: 24.06.2020
(73) Titulaire: Compagnie Plastic Omnium, 69007 Lyon (FR)
(72) Inventeur: COUDRON, Philippe, 01150 SAINTE-JULIE (FR)
(74) Mandataire: LLR

(56) Documents cités:
- EP-A1- 2 776 290
- US-A1- 2003 184 058

## Description

La présente invention concerne le domaine automobile et plus particulièrement les pièces de carrosserie des véhicules automobiles en matière plastique. L'invention traite plus précisément de la sécurité de telles pièces lors d'un impact en cours de roulage.

Il est connu des pièces de carrosserie comprenant des systèmes antichocs à base de renforts structurels ou d'absorbeurs permettant d'assurer la sécurité des utilisateurs en cas d'impact, notamment en cas d'impact avec un autre véhicule. De telles pièces de carrosseries sont décrites dans la demande EP 2 776 290 A1 et comprennent un corps principal en matière plastique constitué de deux parties distinctes dont l'une présente un orifice.

Toutefois, de tels impacts, lorsqu'ils interviennent en cours de roulage, sont plus violents et peuvent conduire à la séparation en au moins deux parties distinctes de la pièce percutée. L'une de ces parties, risque de se détacher et de se retrouver projetée sur la route, ce qui crée un risque pour la sécurité des autres usagers de la route qui se trouvent derrière le véhicule.

Pour pallier cette contrainte sécuritaire, des solutions connues consistent à intégrer, au sein de la pièce, un élément de liaison qui relie deux parties séparables lors d'un choc de la pièce de carrosserie. Il est possible de déterminer par essais et calculs les zones de moindre résistance de la pièce, de définir ainsi les zones de rupture et donc la localisation dans la pièce des parties séparables sous l'effet d'un choc. Un tel élément de liaison connu peut être une tresse de fibres ou un câble de fils métalliques.

Plus précisément, une extrémité de cet élément de liaison est fixée à un renfort structurel présent dans une des parties de la pièce et relie le renfort à un point de forte résistance mécanique avec la caisse du véhicule présent dans l'autre partie de la pièce. Il est ainsi assuré une liaison mécanique entre les deux parties de partie de la pièce.

On connait par exemple, l'utilisation d'un câble de fils métalliques équipé de cosses serties à ses extrémités, mais qui alourdit considérablement la pièce et, par extension, le véhicule, ce qui constitue un réel inconvénient dans le domaine automobile. De plus, l'utilisation d'un câble de fils métallique peut générer un bruit dû aux vibrations du câble pendant le roulage.

Un inconvénient de ces solutions connues est que la fixation de l'extrémité de l'élément de liaison au renfort structurel implique des étapes d'assemblage souvent complexes, comme par exemple un vissage ou une soudure, qui allongent considérablement le procédé de fabrication de la pièce. Par conséquent, ces étapes augmentent considérablement le coût de production des pièces.

L'invention a pour but de remédier à ces inconvénients en fournissant une pièce de carrosserie de véhicule automobile comprenant :
- un corps principal en matière plastique comprenant au moins une première partie et une deuxième partie, la première partie présentant au moins un orifice,
- au moins un renfort structurel fixé au moins partiellement sur la première partie, le renfort structurel présentant au moins un orifice en regard de l'orifice de la première partie, de manière à former un trou traversant,
- au moins un organe de liaison de la première partie et de la deuxième partie comprenant une extrémité, ladite extrémité comprenant au moins une portion pénétrant au moins une fois dans le trou traversant et formant une boucle de verrouillage autour d'un élément de serrage de manière à solidariser l'organe de liaison, le renfort structurel et la première partie.

Ainsi, le verrouillage entre l'organe de liaison, reliant la première partie et la deuxième partie du corps principal, et l'ensemble constitué du renfort structurel fixé à la première partie du corps principal, peut être réalisé de manière simple et rapide. En effet, le trou traversant formé par les orifices respectifs du renfort structurel et de la première partie du corps principal, offre la possibilité d'introduire une extrémité de l'organe de liaison et de former une boucle de verrouillage autour de l'organe de serrage. Cette boucle permet de solidariser l'ensemble à cet endroit précis de la pièce. Ainsi, compte tenu du fait que l'organe de liaison lie les deux parties du corps principal et compte tenu du verrouillage localisé ainsi que d'une solidarisation entre l'organe de liaison et la deuxième partie, les deux parties de la pièce restent liées, et ce, même au cas où la pièce est brisée en deux parties à la suite d'un impact. La pièce selon l'invention permet donc de répondre efficacement aux problématiques sécuritaires liées aux impacts subis par les pièces de carrosserie en cours de roulage, sans pour autant complexifier le procédé de fabrication, ni augmenter le coût de production de l'élément de liaison et de la pièce.

Par « première partie et deuxième partie du corps principal de la pièce de carrosserie », on entend deux parties de la pièce dont on sait qu'elles risquent d'être séparées sous l'effet d'un choc. A titre d'exemple non limitatif, la première partie peut être la partie supérieure d'un hayon destinée à être reliée à la caisse du véhicule, et la deuxième partie peut être la partie inférieure du hayon comprenant notamment le bloc serrure. Les deux parties de la pièce de carrosserie de l'invention peuvent être adjacentes ou séparées par une ou plusieurs parties. Dans le cas d'une première partie et d'une deuxième partie, adjacentes l'une de l'autre, elles sont, de préférence, délimitées par une zone de moindre résistance mécanique dont on sait qu'elle est susceptible de rompre plus facilement en cas de choc violent. Ces deux parties sont, de préférence, d'un seul tenant. Par ailleurs, elles sont, de préférence, réalisées à partir de la même matière.

L'organe de liaison est un organe permettant de conserver une liaison permanente entre la première partie et la deuxième partie du corps principal, et ce, même après que ces deux parties aient été désolidarisées, après un impact par exemple. A ce titre, l'organe de liaison peut être une tresse, par exemple une tresse en fibres de verre. De préférence, la tresse est de section plane.

La boucle de verrouillage peut être obtenue de multiples manières. Elle peut être obtenue en contournant un élément de serrage issu de la première partie du corps principal ou du renfort structurel, ou rattaché au renfort structurel ou/et à la première partie du corps principal. Cet élément de serrage est en saillie depuis le côté opposé au côté depuis lequel l'extrémité de l'organe de liaison est introduite dans le trou traversant (ci-après nommé « côté d'introduction »). Ce faisant, la portion introduite de l'extrémité de l'organe de liaison contourne l'élément de serrage en saillie avant d'être ramenée du côté d'introduction. Dans le cas où un seul trou traversant est prévu, l'extrémité de l'organe de liaison traverse le trou traversant à deux reprises. L'élément de serrage en saillie peut être un élément rapporté au renfort structurel ou/et à la première partie du corps principal ou encore être un élément venu de matière avec le renfort structurel ou la première partie.

La boucle de verrouillage peut également être obtenue comme suit. Le renfort structurel et la première partie du corps principal présentent une pluralité de trous traversant, chacun de ces trous étant obtenu de la même manière que le premier trou traversant présenté, à savoir par la mise en regard de deux orifices, l'un présent dans le renfort structurel et l'autre présent dans la première partie du corps principal. Dans le mode de réalisation où le renfort structurel et la première partie présentent une paire de trous traversants, l'extrémité de l'organe de liaison peut être introduite par un trou traversant et être ramenée du côté d'introduction par l'autre trou traversant. Dans cet exemple, la boucle de verrouillage peut se former autour d'un élément de serrage tel que l'un de ceux décrits dans l'exemple précédent ou autour de la surface de la pièce séparant les deux trous traversants. Dans ce second cas, la surface de la pièce séparant les deux trous traversants constitue l'élément de serrage autour duquel la boucle de verrouillage est formée.

Avantageusement, la première partie du corps principal et/ou le renfort structurel comprennent, en périphérie de leur orifice respectif, au moins une bordure ayant un relief apte à coincer la portion de l'extrémité formant la boucle de verrouillage.

Ainsi, cette présence d'une ou plusieurs bordures formant un ou plusieurs reliefs adaptés permet d'appliquer une contrainte mécanique sur les portions de l'extrémité de l'organe de liaison en contact avec ces bordures. Dès lors, la liberté de mouvement de l'extrémité de l'organe de liaison est réduite et les risques de désolidarisation entre l'organe de liaison, le renfort structurel et la première partie sont réduits. De plus, en fonction des reliefs appliqués sur les bordures et de la tension appliquée sur l'organe de liaison, lors de la formation de la boucle de verrouillage, les contraintes mécaniques appliquées sur les portions de l'extrémité de l'organe de liaison en contact avec les bordures peuvent aboutir à une immobilisation stricte de l'extrémité de l'organe de liaison, une fois la boucle de verrouillage formée.

Avantageusement, une portion de l'extrémité introduite dans le trou traversant est fixée à une portion non introduite de ladite extrémité, de préférence par adhésivage.

Ainsi, avec la fixation d'une portion de l'extrémité introduite de la boucle de verrouillage et une portion non introduite de cette même extrémité offre une sécurité supplémentaire permettant de réduire les risques de désolidarisation de la boucle de verrouillage. Une telle fixation peut être obtenue pas adhésivage entre ces deux portions, mais également par tout autre moyen connu de l'homme du métier. Dans le cas d'un adhésivage, il est envisageable de prévoir le retrait d'un film protecteur d'une zone adhésive, présente sur au moins l'une des faces d'une portions de l'extrémité, cette face étant destinée à être mise en contact avec une autre face pour réaliser la fixation. Une telle mise en œuvre est rapide et simple pour un opérateur.

Alternativement ou en complément de l'adhésivage, l'organe de liaison peut être pourvue - au moins au niveau de deux portions de l'extrémité formant la boucle de verrouillage - de particules de résine thermoplastique qui, lorsque qu'elles sont chauffées et mises en contact permettent de coller les deux portions de l'organe de liaison.

Avantageusement, l'organe de liaison est relié à un point d'ancrage de la deuxième partie, ledit point d'ancrage étant, par exemple, un bloc serrure.

L'organe de liaison est ainsi relié, d'une part, à un des endroits de la deuxième partie du corps principal qui représente un point de forte résistance relié solidement à la caisse du véhicule et, d'autre part, au renfort structurel, lequel est fixé à la première partie du corps principal. Les deux parties de la pièce de carrosserie selon ce mode de réalisation sont donc mieux retenues à la suite d'un impact survenu en cours de roulage, compte tenu du rattachement de l'organe de liaison à des points de forte résistance mécanique dans les deux parties du corps principal de la pièce. De manière générale, le point d'ancrage au sens de la présente invention s'entend comme un point de rattachement à la caisse du véhicule. A titre d'exemple non limitatif, un point de forte résistance mécanique peut être formé par un bloc serrure ou par un renfort interne comme une poutre de choc latérale, reliant deux bords latéraux d'une pièce de carrosserie ou la charnière d'un ouvrant (par exemple une porte latérale ou un hayon).

Avantageusement, la pièce de carrosserie comprend en outre un deuxième renfort structurel fixé au moins partiellement sur la première partie du corps principal, le deuxième renfort structurel présentant au moins un orifice en regard d'un orifice de la première partie du corps principal, de manière à former un deuxième trou traversant.

Ainsi, il est possible de créer un deuxième endroit pour lier la première partie et la deuxième partie du corps principal, soit avec le même organe de liaison, soit avec un organe de liaison supplémentaire. Les risques de perte de la première partie ou/et de la deuxième partie en cas d'impact sont davantage réduits.

Avantageusement, l'organe de liaison comprend une deuxième extrémité, ladite deuxième extrémité comprenant au moins une portion pénétrant au moins une fois dans le deuxième trou traversant et formant une deuxième boucle de verrouillage autour d'un deuxième élément de serrage de manière à solidariser l'organe de liaison, le deuxième renfort structurel et la première partie.

Ainsi, l'organe de liaison relie les deux renforts structurels, fixés chacun à une portion différente de la première partie du corps principal, et relie ainsi doublement la première partie et la deuxième partie du corps principal. De préférence, l'organe de liaison relie chaque ensemble constitué d'un renfort structurel fixé à une portion de la première partie au même endroit de la deuxième partie, de préférence, un point d'ancrage tel que défini précédemment.

Avantageusement, la pièce de carrosserie comprend en outre un deuxième organe de liaison de la première partie et de la deuxième partie, comprenant une extrémité, ladite extrémité comprenant au moins une portion pénétrant au moins une fois dans le deuxième trou traversant et formant une deuxième boucle de verrouillage autour d'un deuxième élément de serrage de manière à solidariser le deuxième organe de liaison, le deuxième renfort structurel et la première partie.

En fonction des besoins et des contraintes associés aux différentes géométries que peuvent adopter les pièces de carrosserie, il est ainsi possible de lier la première partie à deux endroits différents de la deuxième partie. Autrement dit, la première partie peut être reliée, au moyen des deux organes de liaison, à deux points d'ancrage différents de la deuxième partie, chaque organe de liaison pouvant être relié à un desdits points d'ancrage.

Avantageusement, le deuxième organe de liaison est relié à un point d'ancrage de la deuxième partie, ledit point d'ancrage étant, par exemple, un bloc serrure.

Avantageusement, la pièce est un ouvrant, par exemple un hayon ou une porte latérale.

Lorsque la pièce selon l'invention est un hayon, la première partie peut être la partie supérieure du hayon qui est reliée aux charnières, tandis que la deuxième partie peut être la partie inférieure comprenant le bloc serrure. Une configuration similaire est envisageable pour les portes latérales de type « porte papillon » dont les charnières sont situées sur le toit du véhicule plutôt que sur le côté. Concernant les portes latérales dont les charnières sont situées sur un côté, la première partie de la pièce peut être la partie latérale directement rattachée à la caisse du véhicule, tandis que la deuxième partie peut être l'autre partie latérale.

L'invention a aussi pour objet un procédé de fabrication d'une pièce de carrosserie de véhicule automobile caractérisé en ce qu'il comprend les étapes suivantes :
- production d'au moins un renfort structurel comprenant au moins un orifice,
- production d'un corps principal en matière plastique, le corps principal étant subdivisé en au moins une première partie et une deuxième partie, la première partie présentant au moins un orifice destiné à être positionné en regard de l'orifice du renfort structurel,
- fixation du renfort structurel au moins partiellement sur la première partie du corps principal de telle sorte que les orifices en regard forment un trou traversant,
- introduction d'au moins une portion d'une extrémité d'un organe de liaison de la première partie et de la deuxième partie dans le trou traversant formant une boucle de verrouillage autour d'un élément de serrage de manière à solidariser l'organe de liaison, le renfort structurel et la première partie.

L'étape de fixation du renfort structurel sur la première partie peut être réalisée par toute technique connue de l'homme du métier. A titre d'exemple, de telle méthode peut être l'adhésivage, le collage, le vissage, le rivetage ou encore le moulage.

Avantageusement, les étapes de production du corps principal et de fixation du renfort structurel au moins partiellement sur la première partie du corps principal sont réalisées concomitamment, par surmoulage du renfort structurel lors du moulage du corps principal.

Ainsi, la durée totale du procédé de fabrication et l'espace nécessaire à sa réalisation peuvent tous les deux être réduits. Les gains représentés par de telles réductions engendrent une réduction globale du coût fabrication de la pièce de carrosserie.

### Brève description des figures

L'invention sera mieux comprise à la lecture de la description qui va suivre donnée uniquement à titre d'exemple et faite en se référant aux dessins annexés dans lesquels :
[Fig. 1] est un schéma illustrant un hayon selon l'invention,
[Fig. 2] est une vue agrandie d'une portion (en pointillé) du hayon de la figure 1,
[Fig. 3] est une coupe selon le plan de coupe III-III de la figure 2 illustrant un assemblage entre un organe de liaison, un renfort structurel et une première partie du corps principal selon un premier mode de réalisation de l'invention,
[Fig. 4] est une coupe selon le plan de coupe III-III de la figure 2 illustrant un assemblage entre un organe de liaison, un renfort structurel et une première partie du corps principal selon un deuxième mode de réalisation de l'invention,
[Fig. 5] est une coupe selon le plan de coupe III-III de la figure 2 illustrant un assemblage entre un organe de liaison, un renfort structurel et une première partie du corps principal selon un troisième mode de réalisation de l'invention,
[Fig. 6] est une coupe selon le plan de coupe III-III de la figure 2 illustrant un assemblage entre un organe de liaison, un renfort structurel et une première partie du corps principal selon un quatrième mode de réalisation de l'invention, et
[Fig. 7] est une coupe selon le plan de coupe III-III de la figure 2 illustrant un assemblage entre un organe de liaison, un renfort structurel et une première partie du corps principal selon un cinquième mode de réalisation de l'invention

### Description détaillée

La pièce de carrosserie de véhicule 1 selon l'invention comprend un corps principal 2 en matière plastique comprenant au moins une première partie 3 et une deuxième partie 4, la première partie 3 présentant au moins un orifice. La pièce de carrosserie 1 comprend également au moins un renfort structurel 5 fixé au moins partiellement sur la première partie 3, le renfort structurel 5 présentant au moins un orifice en regard de l'orifice de la première partie 3, de manière à former un trou traversant 6. En outre, la pièce 1 comprend au moins un organe de liaison 7 de la première partie 3 et de la deuxième partie 4 comprenant une extrémité 8, ladite extrémité 9 comprenant au moins une portion pénétrant au moins une fois dans le trou traversant 6 et formant une boucle de verrouillage 9 autour d'un élément de serrage 13 de manière à solidariser l'organe de liaison 7, le renfort structurel 5 et la première partie 3.

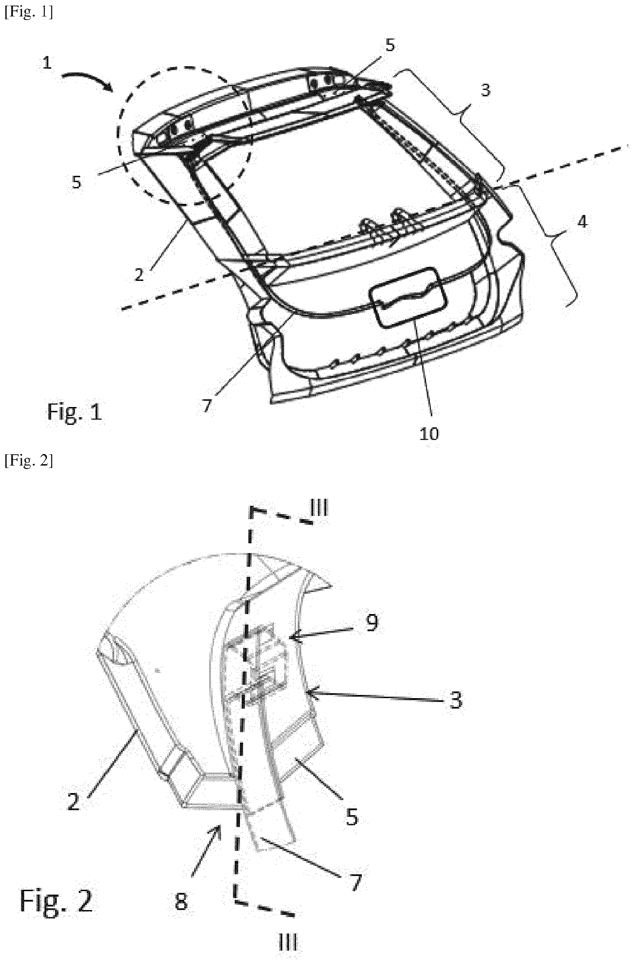

Nous allons désormais décrire cette pièce de carrosserie 1 en tant que hayon (figure 1). Toutefois, l'homme du métier reconnaitra l'application de l'invention à tout autre pièce de carrosserie risquant une séparation en au moins deux parties, en cours de roulage, à la suite d'un impact, par exemple, une porte latérale.

Dans le cas du hayon représenté à la figure 1, la première partie 3 du corps principal 2 correspond à la partie supérieure, par rapport à la ligne de séparation en pointillé, et comprend les charnières permettant de fixer le hayon à la caisse du véhicule (non représentée). La deuxième partie 4 correspond, quant à elle, à la partie inférieure, par rapport à la ligne de séparation en pointillé, et comprend un point d'ancrage, en l'occurrence un bloc serrure 10 qui représente un point de forte résistance mécanique dans la deuxième partie 4 du corps principal 2, compte tenu de sa liaison directe avec la caisse du véhicule. Dans cet exemple de l'invention, la pièce 2 comprend deux renforts structurels 5, chacun fixé à une portion différente de la première partie 3. Ces deux renforts structurels 5 sont reliés l'un à l'autre par l'intermédiaire d'un organe de liaison 7 unique. L'organe de liaison 7 s'étend dans le corps principal 2, depuis les renforts structurels 5 en direction de la deuxième partie 4 et passe par le bloc serrure 10 de la deuxième partie 4.

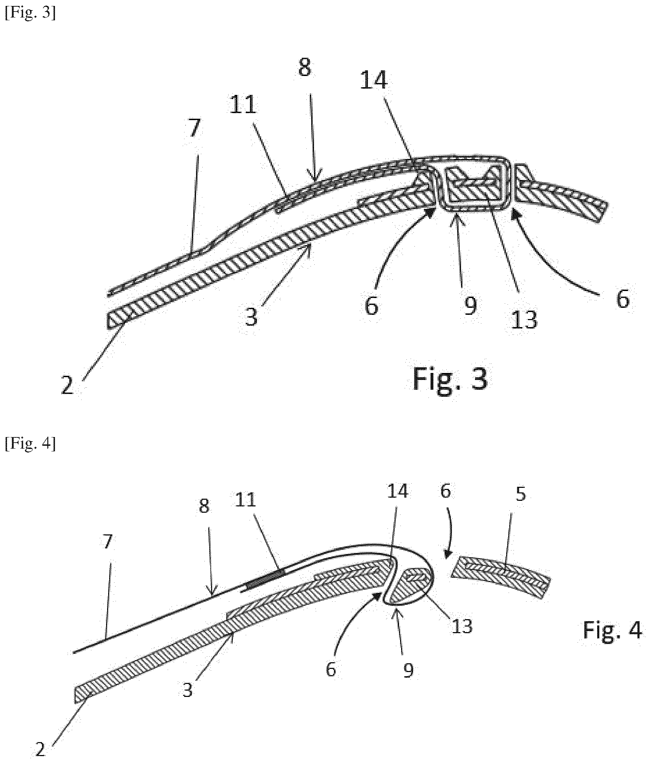

Comme illustré à la figure 2, la boucle de verrouillage 9 permet de solidariser un organe de liaison 7, un renfort structurel 5 et la portion de la première partie 3 sur laquelle est fixé le renfort structurel 5. Cette boucle de verrouillage 9 peut être obtenue de multiples manières, selon les modes de réalisation représentés aux figures 3 à 7, tous ces modes de réalisation étant applicables au hayon illustré à la figure 1.

Dans un des modes de réalisation non illustré de la boucle de verrouillage 9, la première partie 3 du corps principal 2 comprend un élément de serrage 13 en saillie depuis le côté opposé au côté d'introduction de l'extrémité 8 de l'organe de liaison 7. Une portion de l'extrémité 8 est introduite dans le trou traversant 6, formé par un orifice présent dans la première partie 3 du corps principal 2 et un orifice présent dans le renfort structurel 5 et traverse de part en part le trou traversant 6. La portion de l'extrémité 8 introduite contourne l'élément de serrage en saillie 13 et ressort par le même trou traversant 6, formant ainsi la boucle de verrouillage 9. En d'autres termes, une portion de l'extrémité 8 traverse deux fois le trou traversant 6 et se retrouve ainsi du côté d'introduction une fois la boucle de verrouillage 9 formée. Dès lors, cette portion spécifique de l'extrémité 8 peut être fixée à une autre portion de l'organe de liaison 7 située du côté d'introduction afin de sécuriser la formation de la boucle de verrouillage 9 et, par conséquent, sécuriser la solidarisation entre l'organe de liaison 7, le renfort structurel 5 et la portion de la première partie 2 sur laquelle est fixé le renfort structurel 5.

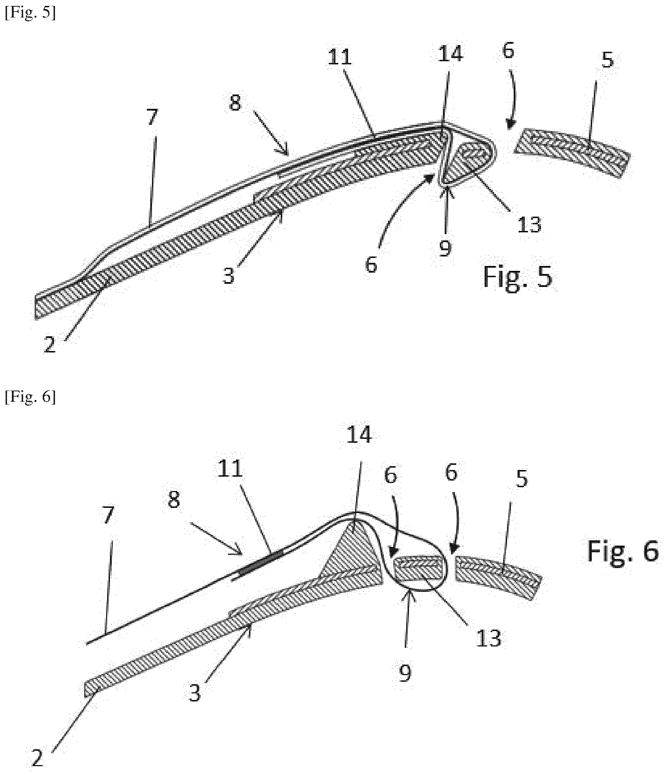

Un autre mode de réalisation de la boucle de verrouillage 9 est illustré à la figure 3. Dans ce mode de réalisation, on observe la présence de deux trous traversants 6, chacun formé par deux orifices en regard, dont l'un est présent dans la première partie 3 du corps principal 2 et l'autre est présent dans le renfort structurel 5. Une portion de l'extrémité 8 de l'organe de liaison 7 est introduite, depuis le coté d'introduction, dans l'un des trous traversants 6, le traverse et ressort par l'autre trou traversant 6, formant ainsi la boucle de verrouillage 9 autour de la surface de la pièce 1 séparant les deux trous traversants 6. Cette surface constitue donc dans ce cas l'élément de serrage 13 autour duquel la boucle de verrouillage 9 est formée. Dans ce mode de réalisation, on observe une bordure de pincement 14 ayant un relief en forme de biseau, ce relief étant agencé pour coincer une portion de l'extrémité 8 entre ladite bordure 14 et une autre portion de l'extrémité 8 lorsque l'organe de liaison est mis sous tension. Par conséquent, la boucle de verrouillage 9, une fois formée, peut être mise sous tension, et ce, avec moins de risque de desserrage de la boucle 9. L'élément de serrage 13 présente également des bordures avec un relief similaire à celui de la bordure de pincement 14 ce qui permet de coincer la portion de la boucle 9 avec laquelle chaque bordure de l'élément de serrage 13 est en contact, lors de la mise sous tension de l'organe de liaison 7. La mise sous tension peut être mise en œuvre soit après que l'autre extrémité de l'organe de liaison 7 a été soit reliée à un point d'ancrage de la deuxième partie 4, soit après que cette autre extrémité a formé une deuxième boucle de verrouillage 9 autour d'un deuxième élément de serrage (non représenté) situé dans une autre portion de la première partie 3 de la pièce 1. L'impact d'une telle mise sous tension de l'organe de liaison 7 sur l'extrémité 8 est illustrée en figure 5. La bordure 14 peut tout à fait être envisagée pour le mode de réalisation précédemment décrit. La bordure 14 et son relief particulier peuvent être formée lors du surmoulage du renfort structurel 5 par la matière plastique formant la première partie 3 du corps principal 2, comme cela est représenté aux figure 3 à 7. Cependant, de telles bordures de pincement 14 peuvent être formées lors de la fabrication du corps principal 2, de manière indépendante à sa fixation avec le renfort structurel 5. Dans ce premier mode de réalisation, le brin libre de l'extrémité 8 de l'organe de liaison est coincé entre une bordure de pincement 14 et le brin non-libre de l'extrémité 8 ce qui sécurise encore davantage la tenue de la boucle de verrouillage 9 dans le temps. De plus, un adhésif 11 est appliqué entre le bord libre et le bord non-libre de l'extrémité 8, sur une longueur conséquente, une fois la boucle de verrouillage 9 formée. L'application de cet adhésif 11 permet d'offrir une sécurité additionnelle dans le cas où la tension appliquée à l'organe de liaison 7 n'est pas optimale ou est détériorée dans le temps.

Le deuxième mode de réalisation (figure 4) de la pièce 1 de l'invention diffère du premier mode de réalisation précédemment décrit comme suit. L'élément de serrage 13 présente une protubérance en saillie depuis le côté opposé au côté d'introduction. Une telle protubérance participe à permettre un excellent coincement de l'extrémité 8 au niveau de la bordure de pincement 14, une fois que l'organe de liaison 7 est mis sous tension. En outre, un adhésif 11 est aussi appliqué entre le bord libre et le bord non-libre de l'extrémité 8, une fois la boucle de verrouillage 9 formée.

Le troisième mode de réalisation de l'invention (figure 5) diffère du deuxième mode de réalisation (figure 4) en ce qu'une couche d'adhésif 11 est appliquée sur toute la longueur de l'extrémité 8 de l'organe de liaison 11. Ainsi, lors de la mise sous tension de l'organe de liaison 7, la partie de l'extrémité 8 qui est en contact avec l'élément de serrage 13 adhère à ce dernier. Le brin libre de l'extrémité 8 adhère également sur une plus grande longueur au brin non-libre de l'extrémité 8. Par conséquent, en plus d'offrir une sécurité supplémentaire, il est alors possible d'adhésiver la tresse sur le corps principal 2 ce qui permet également de prévenir toute nuisance sonore pouvant être causée par des mouvements indésirables du brin libre de l'extrémité 8 contre le corps principal 2.

Le quatrième mode de réalisation (figure 6) diffère du premier mode de réalisation (figure 3) en ce que la bordure de pincement 14 forme une protubérance en saillie depuis le côté d'introduction. Une telle forme de la bordure de pincement 14 permet d'augmenter la force avec laquelle le brin libre de l'extrémité 8 est pincé entre le brin non-libre de l'extrémité 8 et la bordure de pincement 14, lors de la mise sous tension de l'organe de liaison 7.

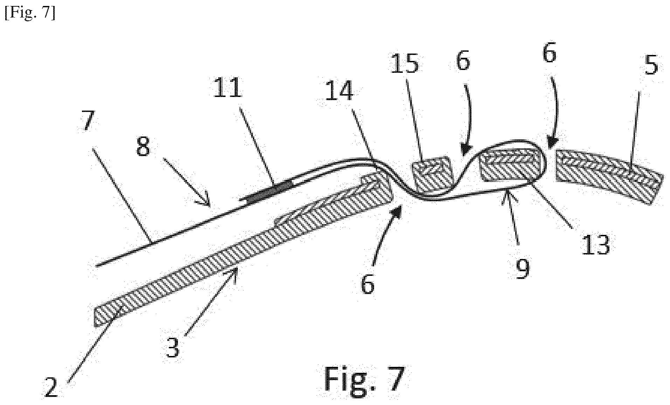

Dans le cinquième mode de réalisation (figure 7), la pièce 1 est pourvue d'un élément de serrage additionnel 15 situé entre l'élément de serrage 13 et la portion de la première partie 3 qui comprend la bordure de pincement 14. Plus précisément, la pièce de carrosserie 1 selon le cinquième mode de réalisation présente trois trous traversants 6, dont deux sont situés de part et d'autre de l'élément de serrage additionnelle 15 et un situé entre l'élément de serrage 13 et la portion de la première partie 3 qui ne comprend pas la bordure de pincement 14. Dans ce mode de réalisation, la boucle de verrouillage 9 est ainsi formée. On introduit, depuis le côté d'introduction, le brin libre de l'extrémité 8 dans le trou situé entre la première partie 3 et l'élément de serrage additionnel 15. On passe, depuis le côté opposé au côté d'introduction, le brin libre dans le trou situé entre l'élément de serrage additionnel 15 et l'élément de serrage 13. On introduit, ensuite, le brin libre dans le dernier trou situé entre l'élément de serrage et la première partie 3. Enfin, on introduit à nouveau le brin libre dans le trou entre la première partie 3 et l'élément de serrage additionnel 15, mais cette fois-ci depuis le côté opposé, de manière à former la boucle de verrouillage 9. Le brin libre est ensuite fixé au brin non-libre à l'aide d'un adhésif 11. Ainsi, deux pincements de l'extrémité 8 de l'organe de liaison 7 s'opèrent lors de la mise sous tension, à savoir un au niveau de l'élément de serrage additionnel 15 et un au niveau de la bordure de pincement 14. Par conséquent, la formation de la boucle de verrouillage 9 par l'extrémité 8 de l'organe de liaison 7 est davantage sécurisée.

L'invention n'est pas limitée aux modes de réalisation présentés et aux variantes de ces modes et d'autres modes apparaîtront clairement à l'homme du métier. Il est notamment un autre mode de réalisation de l'invention possible dans lequel la pièce de carrosserie est une porte latérale ou un mode de réalisation dans lequel plus de deux trous traversants sont prévus et utilisés pour la formation d'une boucle de verrouillage.

### Liste des références

- 1 : pièce de carrosserie de véhicule
- 2 : corps principal
- 3 : première partie du corps principal
- 4 : deuxième partie du corps principal
- 5 : renfort structurel
- 6 : trou traversant
- 7 : organe de liaison
- 8 : extrémité de l'organe de liaison
- 9 : boucle de verrouillage de l'organe de liaison
- 10 : bloc serrure
- 11 : adhésif
- 13 : élément de serrage
- 14 : bordure de pincement de l'organe de liaison
- 15 : élément de serrage additionnel de l'organe de liaison

## Revendications

1. Pièce de carrosserie de véhicule automobile (1) comprenant un corps principal (2) en matière plastique comprenant au moins une première partie (3) et une deuxième partie (4), la première partie (3) présentant au moins un orifice,
**caractérisée en ce que** la pièce de carrosserie comprend :
- au moins un renfort structurel (5) fixé au moins partiellement sur la première partie (3), le renfort structurel (5) présentant au moins un orifice en regard de l'orifice de la première partie, de manière à former un trou traversant (6),
- au moins un organe de liaison (7) de la première partie (3) et de la deuxième partie (3) comprenant une extrémité (8), ladite extrémité (8) comprenant au moins une portion pénétrant au moins une fois dans le trou traversant (6) et formant une boucle de verrouillage (9) autour d'un élément de serrage (13) de manière à solidariser l'organe de liaison (7), le renfort structurel (5) et la première partie (3).

2. Pièce (1) selon la revendication 1, dans laquelle la première partie (3) du corps principal (2) et/ou le renfort structurel (5) comprennent, en périphérie de leur orifice respectif, au moins une bordure (14) ayant un relief apte à coincer la portion de l'extrémité (8) formant la boucle de verrouillage (9).

3. Pièce (1) selon la revendication 1 ou 2, dans laquelle une portion de l'extrémité (8) introduite dans le trou traversant (6) est fixée à une portion non introduite de ladite extrémité (8), de préférence par adhésivage.

4. Pièce (1) selon l'une quelconque des revendications précédentes, dans laquelle l'organe de liaison (7) est relié à un point d'ancrage de la deuxième partie (4), ledit point d'ancrage étant, par exemple, un bloc serrure (10).

5. Pièce (1) selon l'une quelconque des revendications précédentes, comprenant en outre un deuxième renfort structurel (5) fixé au moins partiellement sur la première partie (3) du corps principal (2), le deuxième renfort structurel (5) présentant au moins un orifice en regard d'un orifice de la première partie (3) du corps principal (2), de manière à former un deuxième trou traversant (6).

6. Pièce (1) selon la revendication précédente, dans laquelle l'organe de liaison (7) comprend une deuxième extrémité (8), ladite deuxième extrémité (8) comprenant au moins une portion pénétrant au moins une fois dans le deuxième trou traversant (6) et formant une deuxième boucle de verrouillage (9) autour d'un deuxième élément de serrage (13) de manière à solidariser l'organe de liaison (7), le deuxième renfort structurel (5) et la première partie (3).

7. Pièce (1) selon la revendication 5, comprenant en outre un deuxième organe de liaison (7) de la première partie (3) et de la deuxième partie (4) comprenant une extrémité (8), ladite extrémité (8) comprenant au moins une portion pénétrant au moins une fois dans le deuxième trou traversant (6) et formant une deuxième boucle de verrouillage (9) autour d'un deuxième élément de serrage (13) de manière à solidariser le deuxième organe de liaison (7), le deuxième renfort structurel (5) et la première partie (3).

8. Pièce (1) selon les revendications 5 et 7, dans laquelle le deuxième organe de liaison (7) est relié à un point d'ancrage de la deuxième partie (4), ledit point d'ancrage étant, par exemple, un bloc serrure (10).

9. Pièce (1) selon l'une quelconque des revendications précédentes, dans laquelle la pièce (1) est un ouvrant, par exemple un hayon ou une porte latérale.

10. Procédé de fabrication d'une pièce de carrosserie (1) de véhicule automobile **caractérisé en ce qu'**il comprend les étapes suivantes :
- production d'au moins un renfort structurel (5) comprenant au moins un orifice,
- production d'un corps principal (2) en matière plastique, le corps principal étant subdivisé en au moins une première partie (3) et une deuxième partie (4), la première partie (3) présentant au moins un orifice destiné à être positionné en regard de l'orifice du renfort structurel (5),
- fixation du renfort structurel (5) au moins partiellement sur la première partie (3) du corps principal (2) de telle sorte que les orifices en regard forment un trou traversant (6),
- introduction d'au moins une portion d'une extrémité (8) d'un organe de liaison (7) de la première partie (3) et de la deuxième partie (4) dans le trou traversant (6) formant une boucle de verrouillage (9) autour d'un élément de serrage (13) de manière à solidariser l'organe de liaison (7), le renfort structurel (5) et la première partie (3).

11. Procédé selon la revendication 10, dans lequel les étapes de production du corps principal (2) et de fixation du renfort structurel (5) au moins partiellement sur la première partie (3) du corps principal (2) sont réalisées concomitamment, par surmoulage du renfort structurel (5) lors du moulage du corps principal (2).

## Patentansprüche

1. Kraftfahrzeug-Karosserieteil (1) umfassend einen Hauptkörper (2) aus Kunststoffmaterial, der mindestens einen ersten Teil (3) und einen zweiten Teil (4) umfasst, wobei der erste Teil (3) mindestens eine Öffnung aufweist,
**dadurch gekennzeichnet, dass** das Körperteil umfasst:
- mindestens eine Strukturverstärkung (5), die zumindest teilweise an dem ersten Teil (3) befestigt ist, wobei die Strukturverstärkung (5) mindestens ein Loch aufweist, das dem Loch in dem ersten Teil gegenüberliegt, so dass ein Durchgangsloch (6) gebildet wird,
- mindestens ein Verbindungselement (7) des ersten Teils (3) und des zweiten Teils (3), das ein Ende (8) aufweist, wobei das Ende (8) mindestens einen Abschnitt aufweist, der mindestens einmal in das Durchgangsloch (6) eindringt und eine Verriegelungsschlaufe (9) um ein Klemmelement (13) bildet, um das Verbindungselement (7), die Strukturverstärkung (5) und den ersten Teil (3) zu sichern.

2. Kraftfahrzeug-Karosserieteil (1) nach Anspruch 1, bei dem der erste Teil (3) des Hauptkörpers (2) und/oder die Strukturverstärkung (5) am Umfang ihrer jeweiligen Öffnung mindestens eine Kante (14) aufweisen, die ein Relief hat, das geeignet ist, den Abschnitt des Endes (8), der die Verriegelungsschlaufe (9) bildet, zu verkeilen.

3. Kraftfahrzeug-Karosserieteil (1) nach Anspruch 1 oder 2, wobei ein Abschnitt des in das Durchgangsloch (6) eingeführten Endes (8) mit einem nicht eingeführten Abschnitt des Endes (8) verbunden ist, vorzugsweise durch Kleben.

4. Kraftfahrzeug-Karosserieteil (1) nach einem der vorhergehenden Ansprüche, wobei das Verbindungselement (7) mit einem Verankerungspunkt des zweiten Teils (4) verbunden ist, wobei der Verankerungspunkt z.B. ein Sperrblock (10) ist.

5. Kraftfahrzeug-Karosserieteil (1) nach einem der vorhergehenden Ansprüche, ferner umfassend eine zweite Strukturverstärkung (5), die zumindest teilweise an dem ersten Teil (3) des Hauptkörpers (2) befestigt ist, wobei die zweite Strukturverstärkung (5) mindestens ein Loch aufweist, das einem Loch des ersten Teils (3) des Hauptkörpers (2) gegenüberliegt, um ein zweites Durchgangsloch (6) zu bilden.

6. Kraftfahrzeug-Karosserieteil (1) nach dem vorhergehenden Anspruch, wobei das Verbindungselement (7) ein zweites Ende (8) aufweist, wobei das zweite Ende (8) mindestens einen Abschnitt aufweist, der mindestens einmal in das zweite Durchgangsloch (6) eindringt und eine zweite Verriegelungsschlaufe (9) um ein zweites Klemmelement (13) bildet, um das Verbindungselement (7), die zweite Strukturverstärkung (5) und der erste Teil (3) zu sichern.

7. Kraftfahrzeug-Karosserieteil (1) nach Anspruch 5, ferner umfassend ein zweites Verbindungselement (7) des ersten Teils (3) und des zweiten Teils (4), das ein Ende (8) umfasst, wobei das Ende (8) mindestens einen Abschnitt umfasst, der mindestens einmal in das zweite Durchgangsloch (6) eindringt und eine zweite Verriegelungsschlaufe (9) um ein zweites Klemmelement (13) bildet, um das zweite Verbindungselement (7), die zweite Strukturverstärkung (5) und der erste Teil (3) zu sichern.

8. Kraftfahrzeug-Karosserieteil (1) nach Anspruch 5 und 7, wobei das zweite Verbindungselement (7) mit einem Verankerungspunkt des zweiten Teils (4) verbunden ist, wobei der Verankerungspunkt z.B. ein Sperrblock (10) ist.

9. Kraftfahrzeug-Karosserieteil (1) nach einem der vorhergehenden Ansprüche, wobei das Kraftfahrzeug-Karosserieteil (1) eine Öffnung ist, zum Beispiel eine Heckklappe oder eine Seitentür.

10. Verfahren zur Herstellung eines Kraftfahrzeug-Karosserieteils (1), **dadurch gekennzeichnet, dass** es die folgenden Schritte umfasst:
- Herstellung mindestens einer Strukturverstärkung (5) mit mindestens einem Loch,
- Herstellung eines Hauptkörpers (2) aus Kunststoff, wobei der Hauptkörper in mindestens einen ersten Teil (3) und einen zweiten Teil (4) unterteilt ist, wobei der erste Teil (3) mindestens eine Öffnung aufweist, die dazu bestimmt ist, gegenüber der Öffnung der Strukturverstärkung (5) positioniert zu werden,
- Befestigen der Strukturverstärkung (5) zumindest teilweise an dem ersten Teil (3) des Hauptkörpers (2) in einer solchen Weise, dass die gegenüberliegenden Löcher ein Durchgangsloch (6) bilden,
- Einführen mindestens eines Abschnitts eines Endes (8) eines Verbindungselements (7) des ersten Teils (3) und des zweiten Teils (4) in das Durchgangsloch (6), das eine Verriegelungsschlaufe (9) um ein Klemmelement (13) bildet, um das Verbindungselement (7), die Strukturverstärkung (5) und der erste Teil (3) zu sichern.

11. Verfahren nach Anspruch 10, wobei die Schritte des Herstellens des Hauptkörpers (2) und des Anbringens der Strukturverstärkung (5) zumindest teilweise an dem ersten Teil (3) des Hauptkörpers (2) gleichzeitig ausgeführt werden, indem die Strukturverstärkung (5) während des Formens des Hauptkörpers (2) überspritzt wird.

## Claims

1. Motor vehicle body part (1) comprising a main body (2) made of plastic material comprising at least a first part (3) and a second part (4), the first part (3) having at least one orifice,
**characterised in that** the body part comprises :
- at least one structural reinforcement (5) attached at least partially to the first part (3), the structural reinforcement (5) having at least one hole opposite the hole in the first part, so as to form a through hole (6),
- at least one connecting member (7) of the first part (3) and the second part (3) comprising an end (8), said end (8) comprising at least one portion penetrating at least once into the through hole (6) and forming a locking loop (9) around a clamping element (13) so as to secure the connecting member (7), the structural reinforcement (5) and the first part (3).

2. Part (1) according to claim 1, in which the first part (3) of the main body (2) and/or the structural reinforcement (5) comprise, at the periphery of their respective orifice, at least one edge (14) having a relief capable of wedging the portion of the end (8) forming the locking loop (9).

3. A part (1) according to claim 1 or 2, wherein a portion of the end (8) inserted into the through hole (6) is attached to an uninserted portion of said end (8), preferably by adhesion.

4. Part (1) according to any of the preceding claims, wherein the connecting member (7) is connected to an anchoring point of the second part (4), said anchoring point being, for example, a lock block (10).

5. Part (1) according to any of the preceding claims, further comprising a second structural reinforcement (5) fixed at least partially to the first part (3) of the main body (2), the second structural reinforcement (5) having at least one hole facing a hole of the first part (3) of the main body (2), so as to form a second through hole (6).

6. Part (1) according to the preceding claim, wherein the connecting member (7) comprises a second end (8), said second end (8) comprising at least one portion penetrating at least once into the second through hole (6) and forming a second locking loop (9) around a second clamping element (13) so as to secure the connecting member (7), the second structural reinforcement (5) and the first part (3).

7. Part (1) according to claim 5, further comprising a second connecting member (7) of the first part (3) and the second part (4) comprising an end (8), said end (8) comprising at least one portion penetrating at least once into the second through-hole (6) and forming a second locking loop (9) around a second clamping element (13) so as to secure the second connecting member (7), the second structural reinforcement (5) and the first part (3).

8. Part (1) according to claims 5 and 7, wherein the second connecting member (7) is connected to an anchoring point of the second part (4), said anchoring point being, for example, a lock block (10).

9. Part (1) according to any of the preceding claims, wherein the part (1) is an opening, for example a tailgate or a side door.

10. A method of manufacturing a motor vehicle bodywork part (1), **characterised in that** it comprises the following steps:
- production of at least one structural reinforcement (5) comprising at least one hole,
- production of a main body (2) made of plastic, the main body being subdivided into at least a first part (3) and a second part (4), the first part (3) having at least one hole intended to be positioned opposite the hole of the structural reinforcement (5),
- the structural reinforcement (5) is at least partially attached to the first part (3) of the main body (2) in such a way that the opposing holes form a through hole (6),
- introducing at least a portion of one end (8) of a connecting member (7) of the first part (3) and the second part (4) into the through hole (6) forming a locking loop (9) around a clamping element (13) so as to secure the connecting member (7), the structural reinforcement (5) and the first part (3).

11. A method according to claim 10, wherein the steps of producing the main body (2) and attaching the structural reinforcement (5) at least partially to the first part (3) of the main body (2) are carried out concomitantly, by overmoulding the structural reinforcement (5) when moulding the main body (2).
